Europäisches Patentamt

European Patent Office

Office européen des brevets

(19)

(11) Veröffentlichungsnummer: **0 294 566 B1**

# (12) EUROPÄISCHE PATENTSCHRIFT

(45) Veröffentlichungstag der Patentschrift:
10.07.91 Patentblatt 91/28

(51) Int. Cl.⁵: **C04B 28/14**

(21) Anmeldenummer: 88106261.6

(22) Anmeldetag: 20.04.88

(54) **Verfahren und Anlage zur Herstellung von Gipsfaserplatten.**

(30) Priorität: 06.06.87 DE 3719065
26.09.87 DE 3732497

(43) Veröffentlichungstag der Anmeldung:
14.12.88 Patentblatt 88/50

(45) Bekanntmachung des Hinweises auf die
Patenterteilung:
10.07.91 Patentblatt 91/28

(84) Benannte Vertragsstaaten:
AT BE CH DE ES FR GB GR IT LI LU NL SE

(56) Entgegenhaltungen:
DE-A- 2 649 300
US-A- 1 725 243
US-A- 4 213 931
CHEMICAL ABSTRACTS, Band 92, Nr. 26, Juni
1980, Seite 281, Zusammenfassung Nr.
219907z, Columbus, Ohio, US; & JP-A-79 159
435 (FUKUOKA PREFECTURE) 17-12-1979

(73) Patentinhaber: BABCOCK-BSH
AKTIENGESELLSCHAFT vormals
Büttner-Schilde-Haas AG
Parkstrasse 29 Postfach 4 und 6
W-4150 Krefeld 11 (DE)

(72) Erfinder: Stipek, Josef
Am Mersseberg 25
W-6430 Bad Hersfeld (DE)
Erfinder: Bahner, Friedrich
Panoramastrasse 14a
W-6442 Rotenburg a.d.F. (DE)
Erfinder: Hose, Horst, Dr.
Umbachsweg 43
W-3500 Kassel (DE)
Erfinder: Freisinger, Karl
Lindenweg 16
W-6430 Bad Hersfeld (DE)
Erfinder: Eidam, Helmut
Strasse 39
W-6436 Schenklengsfeld (DE)

(74) Vertreter: Planker, Karl-Josef, Dipl.-Phys.
c/o Deutsche Babcock Anlagen AG
Parkstrasse 29 Postfach 4 + 6
W-4150 Krefeld 11 (DE)

## Beschreibung

Die Erfindung betrifft ein Verfahren zur Herstellung von Gipsfaserplatten gemäß dem Oberbegriff des Patentanspruchs 1 sowie eine Anlage gemäß dem Oberbegriff des Patentanspruchs 7 zur Durchführung des erfindungsgemäßen Verfahrens.

Gegenüber herkömmlichen Verfahren zur Herstellung von Gipsfaserplatten, bei denen als Ausgangsmaterial Kalziumsulfathalbhydrat verwendet wird, hat das Verfahren, von dem der Oberbegriff des Patentanspruchs 1 ausgeht, auf den ersten Blick bestechende Vorteile. Bei der Herstellung der Maische und bei der Formung der Platten liegt der Gips als Dihydrat vor und ist daher nicht abbindefähig. Daher braucht keine Rücksicht auf die Abbindezeit genommen zu werden, und es besteht keine Gefahr, daß die Produktionseinrichtungen durch abbindenden Gips verkrustet oder verstopft werden. Außerdem besteht die Möglichkeit, Verschnitt- oder Ausschußprodukte wieder in die Produktion zurückzuführen. Der wirtschaftlichen Auswertung des Verfahrens stellte sich aber ein unerwartetes Hindernis entgegen : Es zeigte sich, daß der Abbindevorgang extrem träge abläuft.

Ein Verfahren der angegebenen Gattung ist durch die DE-OS 28 16 466 bekannt geworden. Bei diesem Verfahren erfolgt die Rehydratation in der Weise, daß die Platte in einem Raum, in dem eine Luftfeuchtigkeit von 80-100% herrscht, für die Dauer von 2 Stunden bis 7 Tagen gelagert wird. Zur Beschleunigung der Rehydratation kann dem rohen Formkörper vor dem Erhitzen ein Abbindebeschleuniger, wie z.B. $KAl(SO_4)_2$, zugemischt werden. Auch ist es möglich, nach dem Erhitzen einen Abbindebeschleuniger durch Tränken zu applizieren.

Umfangreiche Versuchsreihen haben ergeben, daß in der Praxis die Abbindezeit durchweg in der Größenordnung von einer Woche liegt. Durch die Zugabe eines Beschleunigers läßt sich zwar die Abbindezeit im Mittel etwas verkleinern ; jedoch ist der erzielte Effekt enttäuschend gering. Es hat sich bisher als unmöglich erwiesen, in reproduzierbarer Weise die angegebene Untergrenze der Abbindezeit auch nur annähernd zu realisieren.

In der DE-PS 34 19 558, die auf diesem Stand der Technik aufbaut, wird eine Kombination von Maßnahmen angegeben, mit denen sich die Abbindezeit verkürzen läßt : Die Maische wird auf einen pH-Wert kleiner als 7 eingestellt, und die geformten Platten werden in einem Druckbehälter zwischen 3 Minuten und 50 Minuten in gesättigter Wasserdampfatmosphäre bei 130 bis 170°C behandelt und danach im Druckbehälter durch Ablassen von Wasserdampf abgekühlt.

In der Praxis hat sich ergeben, daß man auch mit diesen Maßnahmen kaum in der Lage ist, eine Abbindezeit von weniger als 50 Stunden zu gewährleisten.

Das träge Abbindeverhalten ist angesichts der kurzen Abbindezeiten, die man ansonsten beim Halbhydrat gewöhnt ist, schwierig zu erklären. Obwohl man eine verzögernde Wirkung von Faserbeimischungen an sich schon lange kennt, ist das Ausmaß dieses unerwünschten Effektes überraschend. Möglicherweise werden infolge der Erhitzung aus den Fasern bisher unbekannte retardierende Substanzen ausgetrieben. Bei vergleichbaren Verfahren, die ohne Faserzusatz arbeiten, ist offenbar kein ähnlicher Effekt aufgetreten ; dies zeigen die nachfolgenden Beispiele.

Gegenstand der DE-OS 31 17 662 ist ein Verfahren zur Herstellung von Gipssteinen, bei dem eine Kalziumsulfatdihydrat-Rohmasse in feuchtem Zustand verpresst, hydrothermal bei einer Temperatur bis zu 473°C behandelt und umgesetzt und anschließend abgekühlt wird. Die Rohmasse kann auch Kieselgur, Flugasche und weitere Zuschlagstoffe wie Sand enthalten. Dabei soll die Rehydratation und Rekristallisation während der Abkühlung – offenbar im Freien – erfolgen, so daß die Steine nach der Abkühlung bereits eine erhebliche Festigkeit haben. Insofern verhalten sich diese Steine, die keine Fasern enthalten, offenbar völlig anders als Faserplatten.

Die DE-OS 28 18 169 betrifft ein Verfahren zum Herstellen von Gipsformteilen, insbesondere Verkleidungsplatten. Diese werden unter Zusatz von Wasser aus Naturgipsdihydrat geformt, einer Wärmebehandlung bei 100-200°C unterworfen, abgekühlt und durch Befeuchten verfestigt. Die Befeuchtung kann durch Eintauchen in Wasser, Besprühen mit Wasser oder Sättigung mit Wasserdampf erfolgen. Anschließend werden die Teile im Lauf von drei Stunden getrocknet. Auch diese Ergebnisse lassen sich nach den Erfahrungen der Erfinder nicht auf faserhaltige Platten übertragen.

Durch die DE-OS 26 49 300 ist schon ein Verfahren zur Herstellung von plattenförmigem Material auf der Basis von Kalziumsulfathalbhydrat bekannt, bei dem das Kalziumsulfathalbhydrat in Gegenwart von Wasser mit faserförmigem Material vermischt, anschließend unter Entwässerung verformt und dann bei 95 bis 140°C getrocknet wird. Eine Umkristallisation des Gipses wird nicht für erforderlich gehalten. Bei diesem Verfahren wird u.a. empfohlen, zunächst eine Aufschlämmung aus Wasser, Kalziumsulfatdihydrat und faserförmigem Material herzustellen und dieser Aufschlämmung Bindemittel zuzusetzen, z.B. vollsynthetische Bindemittel in Kombination mit modifizierten Naturstoffen, z.B. modifizierten Stärken und Carboximethylcellulosen. Dadurch soll u.a. der Verbund zwischen Gips und faserförmigem Material verbessert werden. Die Erfahrung hat aber gezeigt, daß die festigkeitssteigernde Wirkung derartiger Zusätze je nach Dauer und Temperatur der Wärmebehandlung hinter den Erwartungen zurückbleibt. Unbefriedigende Ergebnisse treten vor allem dann auf, wenn –

z.B. gemäß DE-OS 28 16 466 – die Temperatur über den in der DE-OS 26 49 300 angegebenen Bereich hinaus auf bis zu 180°C erhöht wird und die Wärmebehandlung im Autoklaven bei erhöhtem Druck durchgeführt wird, bis das gesamte Kalziumsulfatdihydrat in Kalziumsulfathalbhydrat übergegangen ist. Die verminderte Wirkung des Bindemittelzusatzes ist möglicherweise darauf zurückzuführen, daß die Bindemittel durch die bei der Wärmebehandlung einwirkenden Einflüsse verändert werden. Es ist beispielsweise bekannt, daß sich Stärke unter dem Einfluß von Druck und Temperatur im sauren Medium innerhalb von Stunden in Stärkezucker umsetzt.

Der Erfindung liegt die Aufgabe zugrunde, bei einem Verfahren gemäß dem Oberbegriff des Patentanspruchs 1 die Abbindezeit wesentlich zu verkürzen. Eine weitere Aufgabe besteht darin, eine Anlage gemäß dem Oberbegriff des Patentanspruchs 7 so auszurüsten, daß sie für die Durchführung des erfindungsgemäßen Verfahrens geeignet ist.

Die erste Aufgabe wird durch die im Kennzeichen des Patentanspruchs 1 angegebene Maßnahme gelöst.

Bei Anwendung dieser Maßnahme ergeben sich Abbindezeiten, die regelmäßig weniger als 12 Stunden betragen. Die Wirkungsweise läßt sich noch nicht abschließend erklären. Offenbar wird durch das hindurchgesaugte oder hindurchgedrückte Wasser das poröse Plattengefüge sozusagen gespült. Verunreinigungen, die als Abbindeverzögerer wirken, werden ausgeschwemmt, und das in den Poren enthaltene Wasser, in dem möglicherweise verzögernde Substanzen gelöst sind, wird durch frisches Wasser ersetzt. Die durch den Fasergehalt bedingte filzartige Struktur der Platte wirkt dabei als Filter, so daß die Ausschwemmung von feinen Gipspartikeln unterbleibt.

Eine weitere erhebliche Verkürzung der Abbindezeit auf weniger als zwei Stunden läßt sich durch das Merkmal des Anspruchs 2 erzielen. Diese deutliche Verbesserung steht in einem verblüffenden Gegensatz zu dem erfahrungsgemäß sehr bescheidenen Effekt, den man durch Beimischen des gleichen Beschleunigers zum Rohmaterial erreichen kann.

Durch die Maßnahme des Anspruchs 3 wird überflüssiges Wasser abgesaugt und die nachfolgende Trocknung erleichtert.

Gemäß der in Anspruch 4 angegebenen Ausgestaltung der Erfindung wird in einfacher Weise bei geringstem Aufwand ein festigkeitserhöhendes Bindemittel zugegeben, wobei etwaige negative Einflüsse der Wärmebehandlung auf die Wirksamkeit des Bindemittels völlig ausgeschlossen werden.

Als Bindemittel kann z.B. Stärke eingesetzt werden, aber auch andere pflanzliche, tierische oder synthetische Klebstoffe. Bevorzugt wird gemäß Anspruch 5 dünnsiedende Stärke, weil sie die Zähigkeit des Wassers relativ wenig erhöht und dementsprechend geringen Einfluß auf die Durchströmzeit hat.

Die Stärkekonzentration beträgt gemäß Anspruch 6 vorzugsweise 40-80 g/l.

Der zweite Teil der gestellten Aufgabe wird durch die kennzeichnenden Merkmale des Anspruchs 7 gelöst.

Eine bevorzugte Ausführungsform, bei der die Dichtung den gesamten Zwischenboden abdeckt, ist in Anspruch 8 angegeben.

Die Zeichnung dient zur Erläuterung der Erfindung anhand eines schematisch dargestellten Ausführungsbeispiels.

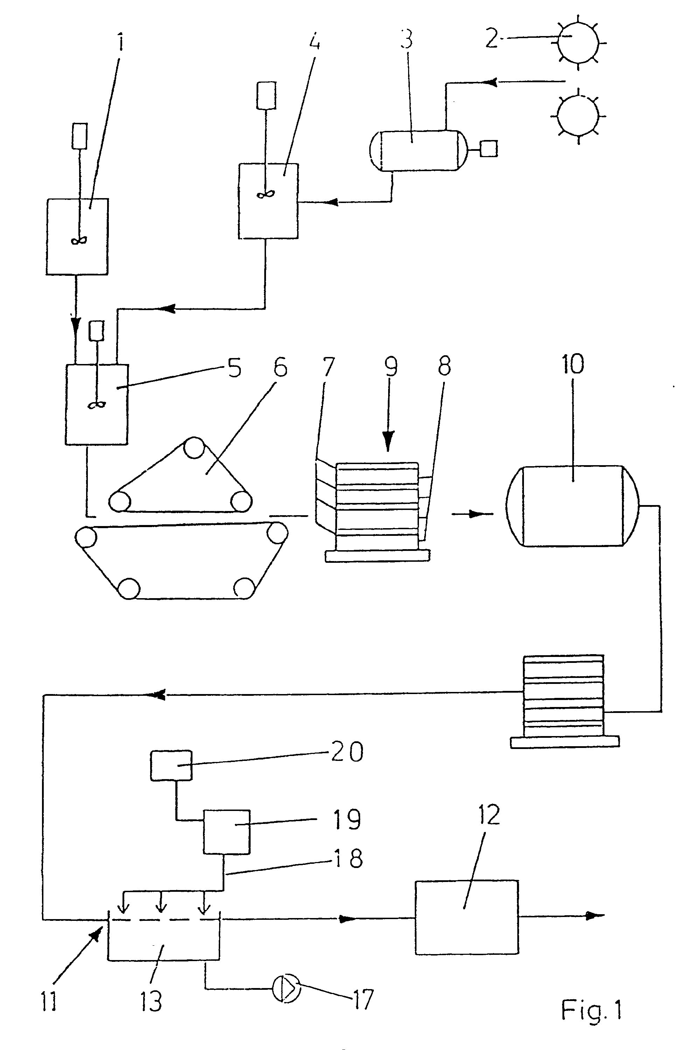

Figur 1 zeigt ein vereinfachtes Fließbild der Gesamtanlage.

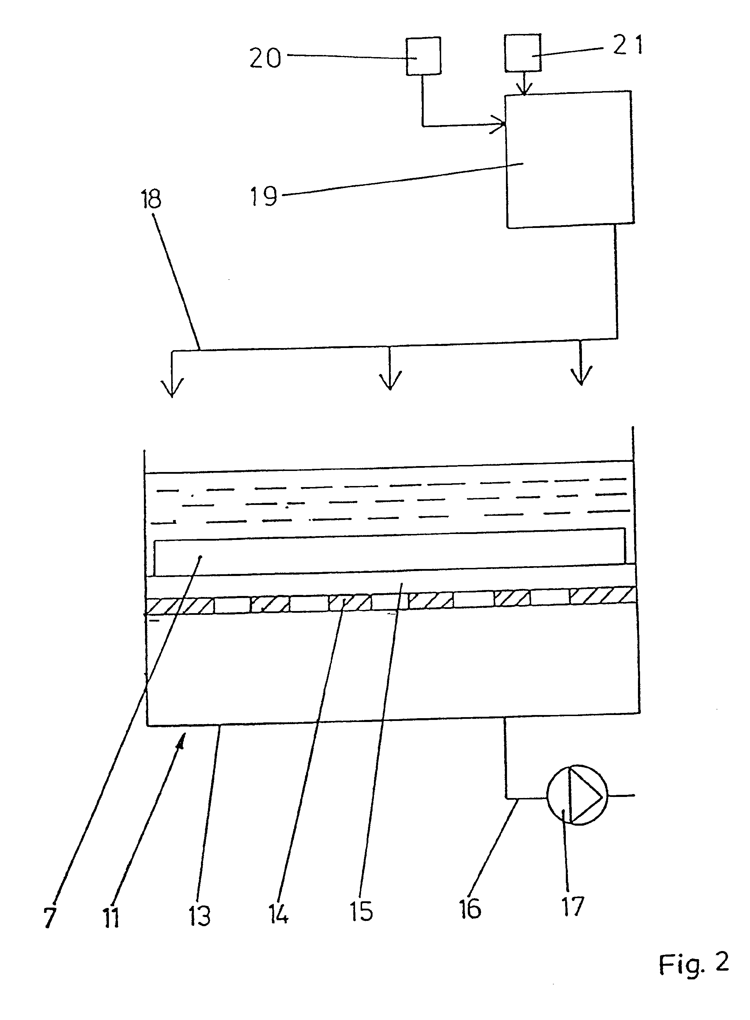

Figur 2 zeigt in vergrößertem Maßstab eine Einzelvorrichtung.

In einem Rührbehälter 1 wird feinkörniges Kalziumsulfatdihydrat, z.B. aus der Rauchgasentschwefelung, mit Wasser zu einer Suspension angerührt.

Das als Faserrohstoff verwendete Altpapier, vorzugsweise Zeitungspapier, wird einer Zerreißmaschine 2 zugeführt. Die austretenden Papierfetzen werden unter Zugabe von Wasser in einem Gefäß 3 zu einer Pülpe verarbeitet, die zunächst in einen Vorratsbehälter 4 gelangt, der mit einem Rührwerk versehen ist. Die Pülpe wird zusammen mit der Gipssuspension in einem Mischer 5 zu einer Maische verarbeitet. Dabei beträgt das Mengenverhältnis zwischen Gips und Fasermaterial, bezogen auf die Trockenstoffe, etwa 10 : 1. Das Wasser-Feststoff-Verhältnis beträgt etwa 3 : 1 bis 4 : 1.

Die Maische wird in einer Formmaschine 6 kontinuierlich zu einem endlosen Band geformt und dabei gleichzeitig mechanisch bis zu einem Wasser-Feststoff-Verhältnis von weniger als etwa 0,4 entwässert. Das Band wird mit einer nicht dargestellten Schneidvorrichtung in Platten 7 zerschnitten, aus denen unter Zwischenfügung von Distanzplatten 8 ein Stapel 9 gebildet wird. Jede Distanzplatte besteht aus zwei durch Abstandhalter getrennten, planparallelen Platten, deren Zwischenraum an den Rändern offen ist. Der Stapel 9 wird in einer Aufheizvorrichtung 10, z.B. einem Autoklaven, etwa 30 Minuten in gesättigter Wasserdampfatmosphäre bei etwa 140-180°C behandelt und anschließend durch Ablassen des Dampfes bis unter 100°C abgekühlt. Insoweit stimmt das Verfahren mit dem aus der DE-PS 34 19 558 bekannten Verfahren überein.

Die abgekühlten Platten gelangen zu einer Durchsaugvorrichtung 11 und weiter zu einem Endtrockner 12.

Von besonderer Bedeutung für die Erfindung ist die Durchsaugvorrichtung 11 und die darin durchgeführte Verfahrensstufe.

Die Durchsaugvorrichtung 11 besteht aus einem Trog 13, in dem ein biegesteif ausgeführter, gelochter Zwischenboden 14 angebracht ist. Auf dem Zwischenboden 14 liegt eine mattenartige Auflage 15 aus weichem gummiartigem Material, das mit zahlreichen nah beieinanderliegenden engen Löchern versehen ist. Der Trog 13 ist durch eine an seinem Boden angeschlossene Saugleitung 16 mit einer Saugpumpe 17 verbunden. Über dem Trog 13 befindet sich eine mit mehreren Düsen versehene Wasserleitung 18, die von einem Vorratsbehälter 19 ausgeht. Dem Vorratsbehälter 19 ist eine Vorrichtung 20 zum dosierten Zuführen von Abbindebeschleunigern zugeordnet, z.B. Kaliumsulfat oder Aluminiumsulfat oder deren Kombinationen, außerdem eine Vorrichtung 21 zum dosierten Zugeben von Stärke.

Jede einzelne Platte wird auf die Auflage 15 gelegt und anschließend mit Wasser überflutet, das etwa 5% Abbindebeschleuniger in Lösung enthält. Mit der Pumpe 17 wird das überstehende Wasser durch die Platte 7 hindurchgesaugt. Die Auflage 15 wirkt dabei als Dichtung gegen seitliche Kurzschlußströme und sorgt gleichzeitig für eine gleichmäßige Durchsaugung auf der ganzen Plattenfläche. Das Volumen des hindurchgesaugten Wassers ist ein Mehrfaches des Plattenvolumens. Die erforderliche Druckdifferenz beträgt je nach Plattendicke etwa 0,4 bis 0,8 bar. Die Gesamtdauer des Saugvorganges ist z.B. bei Platten von 10 mm Dicke weniger als 1 Minute, bei dickeren Platten entsprechend länger.

Nachdem das Wasser durch die Platte 7 hindurchgesaugt ist, bleibt die Pumpe 17 noch einen kurzen Augenblick in Betrieb, um noch Luft durch die Platte hindurchzusaugen. Die so behandelte Platte wird in dem Endtrockner 12 bei niedriger Temperatur getrocknet und bindet in etwa einer halben Stunde bis höchstens zwei Stunden ab.

Die festigkeitssteigernde Wirkung eines Bindemittels ergibt sich aus folgendem Beispiel : Durch eine 1 cm dicke Gipsfaserplatte wurde eine Wassermenge von 40 l/m² hindurchgesaugt. Das Wasser war mit Stärke in einer Konzentration von 40 g/l versetzt. Die Biegezugfestigkeit der Platte lag nach dem Abbinden und Trocknen bei 8,5 N · mm⁻². Eine unter sonst gleichen Bedingungen hergestellte Platte, bei der dem Wasser kein Bindemittel zugesetzt worden war, hatte eine Biegezugfestigkeit von 6,0 N · mm⁻².

**Patentansprüche**

1. Verfahren zur Herstellung von Gipsfaserplatten, bei dem die Platten aus einer Kalziumsulfatdihydrat und Fasern enthaltenden Maische geformt werden, anschließend auf eine Temperatur zwischen 115 und 180°C erhitzt werden, bis das Dihydrat in eine wasserärmere Form des Kalziumsulfats, insbesondere Halbhydrat, übergegangen ist, danach abgekühlt und schließlich äußeren Bedingungen ausgesetzt werden, bei denen das wasserärmere Kalziumsulfat wieder in Dihydrat umgewandelt wird, dadurch gekennzeichnet, daß nach der Abkühlung Wasser durch die Platten hindurchgesaugt oder hindurchgedrückt wird.

2. Verfahren nach Anspruch 1, dadurch gekennzeichnet, daß in dem Wasser Abbindebeschleuniger gelöst sind.

3. Verfahren nach einem der Ansprüche 1 bis 2, dadurch gekennzeichnet, daß anschließend Luft durch die Platten hindurchgesaugt oder hindurchgedrückt wird.

4. Verfahren nach einem der Ansprüche 1 bis 3, dadurch gekennzeichnet, daß das Wasser, das nach der Abkühlung durch die Platten hindurchgesaugt oder hindurchgedrückt wird, mit Bindemittel versetzt ist.

5. Verfahren nach Anspruch 4, dadurch gekennzeichnet, daß als Bindemittel dünnsiedende Stärke verwendet wird.

6. Verfahren nach Anspruch 5, dadurch gekennzeichnet, daß die Stärkekonzentration 40 bis 80 g/l beträgt.

7. Anlage zur Herstellung von Gipsfaserplatten nach dem Verfahren gemäß einem der Ansprüche 1 bis 6,

mit Vorrichtungen zur Herstellung einer Kalziumsulfatdihydrat und Fasern enthaltenden Maische und zum Formen, Aufheizen und Abkühlen der Platten,

gekennzeichnet durch eine nachgeschaltete Vorrichtung (11) zum Hindurchsaugen von Wasser durch die gekühlten Platten, bestehend im wesentlichen aus einem Trog (13) mit einem siebartigen Zwischenboden (14), der zumindest längs seines Randes mit einer Dichtung versehen ist, und mit einer am Boden des Troges (13) angeschlossenen Absaugleitung (16).

8. Anlage gemäß Anspruch 7, dadurch gekennzeichnet, daß der Zwischenboden (14) auf seiner ganzen Fläche mit einer perforierten Auflage (15) aus gummiartigem Material abgedeckt ist.

**Claims**

1. A method of manufacturing fibrous plasterboards, wherein the plates are formed from a mash containing calcium sulphate dihydrate and fibres, are then heated to a temperature between 115°C and 180°C, until the dihydrate has changed into a form of the calcium sulphate containing less water, particularly hemihydrate, are subsequently cooled and finally exposed to external conditions in which the calcium sulphate containing leas water is converted back into dihydrate, characterised in that water is sucked or pressed through the boards after cooling.

2. A method according to claim 1, characterised in that accelerators are dissolved in the water.

3. A method according to any one of claims 1 to 2, characterised in that air is then sucked or pressed through the boards.

4. A method according to any one of claims 1 to 3, characterised in that the water, which is sucked or pressed through the boards after cooling, is mixed with bonding agents.

5. A method according to claim 4, characterised in that medium to high viscous hydrolyzed starch is used as a bonding agent.

6. A method according to claim 5, characterised in that the starch concentration is 40 to 80 g/l.

7. An installation for manufacturing fibrous plasterboards in accordance with the method according to any one of claims 1 to 6, with devices for manufacturing a mash containing calcium sulphate dihydrate and fibres, and for forming, heating and cooling the boards, characterised by a subsequently connected device (11) for sucking water through the cooled boards, substantially comprising a trough (13) with a sieve-like intermediate floor (14) which is provided with a seal at least along its edge, and with a suction conduit (16) connected to the base of the trough (13).

8. An installation according to claim 7, characterised in that the whole surface of the intermediate floor (14) is covered with a perforated layer (15) made of rubber-type material.

## Revendications

1. Procédé de fabrication de panneaux en staff, dans lequel les panneaux sont moulés à partir d'une masse trempée contenant du dihydrate de sulfate de calcium et des fibres, sont ensuite chauffés à une température comprise entre 115 et 180°C, jusqu'à ce que le dihydrate soit transformé en une forme plus pauvre en eau du sulfate de calcium, en particulier en semi-hydrate, sont ensuite refroidis et enfin sont soumis à des conditions externes dans lesquelles le sulfate de calcium pauvre en eau est à nouveau transformé en dihydrate, caractérisé en ce que, après le refroidissement, de l'eau est aspirée ou comprimée à travers les panneaux.

2. Procédé suivant la revendication 1, caractérisé en ce que des accélérateurs de prise sont dissous dans l'eau.

3. Procédé suivant l'une des revendications 1 et 2, caractérisé en ce qu'ensuite de l'air est aspiré ou comprimé à travers les panneaux.

4. Procédé suivant l'une des revendications 1 à 3, caractérisé en ce que l'eau, qui est aspirée ou comprimée à travers les panneaux après le refroidissement, est additionnée d'un liant.

5. Procédé suivant la revendication 4, caractérisé en ce qu'on utilise, comme liant, de l'amidon fluide.

6. Procédé suivant la revendication 5, caractérisé en ce que la concentration en amidon est de 40 à 80 g/litre.

7. Installation pour la fabrication de panneaux en staff selon le procédé suivant l'une des revendications 1 à 6, comprenant des dispositifs pour la préparation d'une masse trempée contenant du dihydrate de sulfate de calcium et des fibres et pour le moulage, le chauffage et le refroidissement des panneaux, caractérisée par un dispositif monté en aval (11) pour l'aspiration d'eau au travers des panneaux refroidis et constitué essentiellement d'une cuve (13) présentant un fond intermédiaire (14) de type tamis qui est pourvu au moins le long de son bord d'un organe d'étanchéité, et par un conduit d'aspiration (16) raccordé au fond de la cuve (13).

8. Installation suivant la revendication 7, caractérisée en ce que le fond intermédiaire (14) est couvert sur toute sa surface d'une couche perforée (15) en une matière caoutchouteuse.

Fig.1

Fig. 2